# EUROPÄISCHE PATENTANMELDUNG

(11) **EP 4 418 150 A1**
(43) Veröffentlichungstag der Anmeldung: **21.08.2024**
(21) Anmeldenummer: 23156693.6
(22) Anmeldetag: 15.02.2023
(51) Int. Cl.: G06F 18/214, G06V 10/774, G06V 30/19, G06F 3/04842

(54) **VERFAHREN ZUM ERZEUGEN VON TRAININGSDATEN FÜR EIN OBJEKT ZUM ANLERNEN EINER KÜNSTLICHEN INTELLIGENZ, COMPUTERPROGRAMMPRODUKT, COMPUTERLESBARES SPEICHERMEDIUM SOWIE TRAININGSSYSTEM**

(71) Anmelder: Siemens Aktiengesellschaft, 80333 München (DE)
(72) Erfinder: Janisch, Lucas, 80803 München (DE); Pantano, Matteo, 81737 München (DE)
(74) Vertreter: Siemens Patent Attorneys

(57) **Zusammenfassung**

Die Erfindung betrifft ein Verfahren zum Erzeugen von Trainingsdaten (12), mit den Schritten:
- Erfassen von zumindest einem ersten Bild (26a, 26b) und einem zweiten Bild (28a, 28b) mit dem Objekt (14);
- Erfassen einer Eingabe (30) einer Bedienperson (32) bezüglich einer Position des Objekts (14) im angezeigten ersten Bild (26a, 26b);
- Bestimmen des Objekts (14) im ersten Bild (26a, 26b) in Abhängigkeit von der Eingabe (30);
- Erzeugen einer ersten Objektinformation (34) in Abhängigkeit von dem bestimmten Objekt (14);
- Bestimmen des Objekts (14) im zweiten Bild (28a, 28b) in Abhängigkeit von der bestimmten ersten Objektinformation (34) ;
- Erzeugen von einer zweiten Objektinformation (36) in Abhängigkeit von dem bestimmten Objekt (14); und
- Erzeugen von Trainingsdaten (12) für das Objekt (14) .Ferner betrifft die Erfindung ein Computerprogrammprodukt, ein computerlesbares Speichermedium sowie ein Trainingssystem (10).

## Beschreibung

Die Erfindung betrifft ein Verfahren zum Erzeugen von Trainingsdaten für ein Objekt zum Anlernen einer künstlichen Intelligenz mittels eines Trainingssystems gemäß dem geltenden Patentanspruch 1. Ferner betrifft die Erfindung ein Computerprogrammprodukt, ein computerlesbares Speichermedium sowie ein Trainingssystem.

Beispielsweise für das Training von Anwendungen von einer künstlichen Intelligenz (KI) wird ein Datensatz mit gelabelten Daten benötigt. In Zusammenhang mit entsprechenden KI-Anwendungen, die sich mit Bilddaten befassen, bedeutet dies, dass Datensätze erfasst werden müssen und die Kennzeichnung durch menschliche Experten erfolgen muss. Dieser Prozess kann jedoch zeitaufwendig und teuer sein.

Zur Lösung dieses Problems gibt es mehrere Werkzeuge und Methoden. Diese Werkzeuge können in zwei Klassen unterteilt werden: entweder in Beschriftungswerkzeuge, die menschliche Eingaben erfordern, oder in automatische Generatoren für synthetische Daten.

In der ersten Klasse sollen die Werkzeuge menschlichen Experten helfen, mehrere Bilder zu beschriften, indem sie Methoden nutzen, um die Zeit für die Beschriftung jedes Bildes zu reduzieren. Das bekannteste Beispiel ist GrabCut. Grabcut ist ein Tool, das anhand einiger Punkte, die den Hintergrund und die Merkmale markieren, automatisch ein beschriftetes Bild erzeugen kann. Durch diese Methode ist es möglich, die Anzahl der Eingaben für die Beschriftung zu reduzieren und somit die Gesamtbeschriftungszeit zu verringern. In ähnlicher Weise können Superpixel-Ansätze verwendet werden, um die gleichen Ergebnisse zu erzielen. Anders als Grabcut nutzt dieser Ansatz jedoch die Erzeugung kleiner Bereiche, die ähnliche Merkmale aufweisen, die der menschliche Experte markieren kann.

Bei der zweiten Klasse wird versucht, gekennzeichnete Daten zu erstellen, ohne dass ein menschlicher Experte benötigt wird. Dies wird durch die Verwendung eines Generators für synthetische Daten erreicht, der keine Bilder aus dem realen Szenario verwendet, sondern Bilder mit fotorealistischen 3D-Rendering-Engines erzeugt, um Trainingsbilder mit gelabelten Informationen zu generieren.

Aufgabe der vorliegenden Erfindung ist es, ein Verfahren, ein Computerprogrammprodukt, ein computerlesbares Speichermedium sowie ein Trainingssystem zu schaffen, mittels welchen effizient und effektiv Trainingsdaten für eine künstliche Intelligenz zum Anlernen einer künstlichen Intelligenz erzeugt werden können.

Diese Aufgabe wird durch ein Verfahren, ein Computerprogrammprodukt, ein computerlesbares Speichermedium sowie ein Trainingssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen von Trainingsdaten für ein Objekt zum Anlernen einer künstlichen Intelligenz mittels eines Trainingssystems. Es erfolgt das Erfassen von zumindest einem ersten Bild mit dem Objekt aus einer ersten Perspektive und das Erfassen von zumindest einem zweiten Bild mit dem Objekt aus einer zur ersten Perspektive unterschiedlichen zweiten Perspektive mittels einer Erfassungseinrichtung des Trainingssystems. Es wird das erste Bild auf einer Anzeigeeinrichtung des Trainingssystems angezeigt. Eine Eingabe einer Bedienperson des Trainingssystems bezüglich einer Position des Objekts im angezeigten ersten Bild wird mittels einer Eingabeeinrichtung des Trainingssystems erfasst. Es erfolgt das Bestimmen des Objekts im ersten Bild in Abhängigkeit von der Eingabe der Bedienperson mittels einer elektronischen Recheneinrichtung des Trainingssystems. Es wird eine erste Objektinformation in Abhängigkeit von dem bestimmten Objekt im ersten Bild mittels der elektronischen Recheneinrichtung erzeugt. Es wird das Objekt im zweiten Bild in Abhängigkeit von der bestimmten ersten Objektinformation bestimmt. Es erfolgt das Erzeugen von einer zweiten Objektinformation in Abhängigkeit von dem bestimmten Objekt im zweiten Bild mittels der elektronischen Recheneinrichtung und das Erzeugen von Trainingsdaten für das Objekt zumindest in Abhängigkeit von der ersten Objektinformation und der zweiten Objektinformation mittels der elektronischen Recheneinrichtung.

Insbesondere ermöglicht somit die Erfindung das Nutzen von real erfassten Bildern, ohne entsprechende CAD-Modelle für das Anlernen der künstlichen Intelligenz. Darüber hinaus nutzt das Trainingssystem das Expertenwissen der Bedienperson direkt, wodurch die Vertraulichkeit der Daten entsprechend gewährleistet wird und der reale Anwendungsfall bestmöglich nachgebildet wird.

Insbesondere löst somit die Erfindung das Problem, dass Lösungen gemäß dem Stand der Technik eine Lücke aufweisen, da insbesondere ein synthetischer Ansatz zwar Daten von guter Qualität erzeugen kann, aber hierzu insbesondere ein CAD-Modell des Objekts beziehungsweise Teil erforderlich ist und keine entsprechenden Daten erzeugt, die einem realen Anwendungsfall entsprechen. Auf der anderen Seite kann die manuelle Erzeugung von Daten beziehungsweise das Labeling von Daten zwar erzeugt werden, die dem realen Anwendungsfall am ehesten entsprechen, aber die beschrifteten Daten können insbesondere fehlerhaft sein und ihre Erzeugung ist sehr zeitaufwendig.

Daher ist vorliegend insbesondere ein hybrides Verfahren beschrieben, das die Vorteile der beiden Methoden, das heißt insbesondere Daten aus der realen Welt und qualitativ hochwertige, fehlerfreie Beschriftungen, nutzt und die Notwendigkeit von CAD-Dateien für das Objekt beseitigt.

Insbesondere ist vorgesehen, dass eine Vielzahl von Bildern erfasst wird und eine Vielzahl von Objektinformationen erzeugt wird. Es wird dann wiederum in Abhängigkeit von der ersten Objektinformation die Vielzahl von Bildern und Objektinformationen entsprechend ausgewertet. Insbesondere ist somit vorgesehen, dass für ein jeweiliges Bild aus einer unterschiedlichen Perspektive des Objekts die vorgeschlagenen maskierten Regionen untersucht werden und beispielsweise einem Nutzer entsprechend angezeigt werden können und somit zur Auswertung führen.

Gemäß einer vorteilhaften Ausgestaltungsform werden die erste Objektinformation und/oder die zweite Objektinformation auf Basis von Ähnlichkeiten in einer umgebenden Region der Eingabe erzeugt. Insbesondere wird somit eine Suche nach Ähnlichkeiten in Regionen nahe der Position der Eingabe untersucht. Als Objektinformation kann insbesondere beispielsweise eine Oberfläche des Objekts dienen. Mit anderen Worten wird um die Position der Eingabe herum das Bild auf Ähnlichkeiten untersucht. Dadurch kann festgestellt werden, dass beispielsweise ein Punkt um den Eingabepunkt herum ebenfalls mit zu dem Objekt, beispielsweise der Oberfläche des Objekts, gehört. Somit ist es ermöglicht, dass zuverlässig die erste Objektinformation und die zweite Objektinformation erfasst werden können. Insbesondere wird dies als Maskierung bezeichnet.

Ferner hat es sich als vorteilhaft erwiesen, wenn mittels eines neuronalen Netzwerks der elektronischen Recheneinrichtung die erste Objektinformation und/oder die zweite Objektinformation bestimmt werden. Bei dem neuronalen Netzwerk handelt es sich insbesondere um einen Decoder und um einen Encoder. Insbesondere kann beispielsweise vorgesehen sein, dass der Punkt der Eingabe in der dreidimensionalen Welt festgelegt wird und durch die Projektion auf den Bildraum abgebildet wird. Die Eingabe durch die Bedienperson, welche insbesondere als erste Vermutung angesehen werden kann, wird dann von dem neuronalen Netzwerk entsprechend übernommen und ausgewertet. Somit kann effektiv und effizient die Objektinformation erzeugt werden.

Ferner hat es sich als vorteilhaft erwiesen, wenn mittels einer Kamera als Erfassungseinrichtung zumindest das erste Bild und/oder das zweite Bild erfasst werden. Insbesondere wird mittels der Kamera eine Vielzahl von Bildern entsprechend erfasst. Auf Basis der Kamera können somit entsprechende Bilder aufgenommen werden und eine effiziente und effektive Auswertung der Bilder zum Erzeugen der Trainingsdaten realisiert werden.

Eine weitere vorteilhafte Ausgestaltungsform sieht vor, dass als erstes Bild und/oder als zweites Bild ein RGB-Bild mit dem Objekt erfasst werden. Ferner kann vorgesehen sein, dass als erstes Bild und/oder als zweites Bild ein Tiefenbild mit dem Objekt erfasst werden. Weiterhin kann vorgesehen sein, dass zum Bestimmen der ersten Objektinformation und/oder der zweiten Objektinformation eine RGB-Information des RGB-Bilds und eine Tiefeninformation des Tiefenbilds des ersten Bilds und/oder des zweiten Bilds genutzt werden. Bei dem RGB-Bild handelt es sich insbesondere um ein so genanntes Rot-Gelb-Blau-Bild. Insbesondere wird somit das zu erfassende Objekt über die Kamera aufgenommen, welche wiederum ein jeweiliges 2D-RGB-Bild erzeugen und das Tiefenbild der realen Umgebung erzeugen kann. Die Bilder sowohl im RGB-Bild als auch im Tiefenbild weisen dabei die Objekte beziehungsweise das Objekt auf. Es wird eine Vielzahl von Bildern entsprechend aus unterschiedlichen Perspektiven mittels der Kamera aufgenommen, so dass ein vollständiger Datensatz erstellt wird. Auf Basis der RGB-Bilder und der Tiefenbilder kann die Position der ersten Vermutung des Benutzers beziehungsweise der Bedienperson entsprechend fein abgestimmt werden, so dass die Eingabe wiederum auf dem Teil des Bildes liegt, in dem sich das Objekt auch befindet.

Ferner hat es sich als vorteilhaft erwiesen, wenn mittels einer automatisierten Einheit, welche die Erfassungseinrichtung aufweist, zumindest das erste Bild und das zweite Bild erfasst werden. Somit ist es insbesondere möglich, dass automatisiert das erste Bild und das zweite Bild, insbesondere die Vielzahl von Bildern, entsprechend erzeugt werden können. Dadurch kann eine automatisierte und somit zeitsparende Erzeugung von Trainingsdaten realisiert werden.

Ferner hat es sich als vorteilhaft erwiesen, wenn mittels der elektronischen Recheneinrichtung Steuerbefehle für die automatisierte Einheit erzeugt werden, so dass auf Basis der Steuerbefehle zumindest zwei Positionen durch die automatisierte Einheit angefahren werden und wobei an einer jeweiligen Position ein jeweiliges Bild mit dem Objekt erfasst wird. Insbesondere sind die zwei Positionen derart gewählt, dass diese unterschiedliche Perspektiven auf das Objekt ermöglichen. Insbesondere kann eine Vielzahl von Positionen auf Basis der Steuerbefehle entsprechend angefahren werden. Dadurch ist es ermöglicht, dass automatisiert das Verfahren entsprechend durchgeführt werden kann. Beispielsweise kann es sich bei der automatisierten Einheit um einen Roboter handeln, welcher die Kamera aufweist. Der automatisierte Roboter kann beispielsweise bodenbasiert oder auch als Drohne ausgebildet sein.

Ferner hat es sich als vorteilhaft erwiesen, wenn mittels eines neuronalen Netzwerks die Eingabe der Bedienperson verifiziert wird. Insbesondere wird der Punkt in der 3D-Welt festgelegt durch die Projektion auf den Bildraum. Diese Eingabe durch die Bedienperson, dies entspricht dabei lediglich einer ersten Vermutung, wird dann wiederum vom neuronalen Netzwerk übernommen, das unter Verwendung des RGB-Bilds und des Tiefenbilds die Position der ersten Vermutung so fein abstimmt, dass diese auf dem Teil des Bildes liegt, in dem sich das Objekt befindet. Dieser Schritt ist wird durchgeführt, da die Benutzereingabe bei der ersten Vermutung ungenau sein könnte. Anschließend wird der korrigierte Punkt von einem anderen Algorithmus übernommen, der durch die Suche nach Ähnlichkeiten in Regionen nahe der korrigierten ursprünglichen Vermutung eine entsprechende Region beziehungsweise Maske vorschlägt, in der sich das Objekt befindet.

Ferner hat es sich als vorteilhaft erwiesen, wenn, bevor die Trainingsdaten erzeugt werden, der Bedienperson die erste Objektinformation und die zweite Objektinformation auf der Anzeigeeinrichtung zum Bestätigen angezeigt werden. Mit anderen Worten wird die durch die elektronische Recheneinrichtung bestimmte vorgeschlagene und maskierte Region der Bedienperson entsprechend angezeigt. Dabei erhält wiederum die Bedienperson eine Rückmeldung über die entsprechende Qualität der Segmentierung, um anschließend diese Region durch Eingabe zusätzlicher Positionen beispielsweise in der dreidimensionalen Welt zu ändern. Schließlich wird dieses Feedback an den Segmentierungsalgorithmus beziehungsweise der elektronischen Recheneinrichtung zurückgegeben, und der Arbeitsablauf wird so lange wiederholt, bis eine nochmals weitere Benutzereingabe erfolgt, welche den Abschluss des Verfahrens beschreibt. Beispielsweise kann diese Benutzereingabe wiederum erst dann erfasst werden, wenn der Benutzer beziehungsweise die Bedienperson auch mit der entsprechenden Segmentierung zufrieden ist.

Ebenfalls vorteilhaft ist, wenn vor dem Erzeugen der Trainingsdaten eine weitere Eingabe der Bedienperson bezüglich einer weiteren Position des Objekts im ersten Bild und/oder im zweiten Bild erfasst wird. Somit kann hocheffektiv die elektronische Recheneinrichtung beziehungsweise das neuronale Netzwerk angelernt werden, wodurch effizient und effektiv die Trainingsdaten erzeugt werden können.

Bei dem vorgeschlagenen Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft daher auch ein computerlesbares Speichermedium mit zumindest dem Computerprogrammprodukt.

Ferner betrifft die Erfindung auch ein Trainingssystem zum Erzeugen von Trainingsdaten für ein Objekt zum Anlernen einer künstlichen Intelligenz, mit zumindest einer Erfassungseinrichtung, einer Anzeigeeinrichtung, einer Eingabeeinrichtung und einer elektronischen Recheneinrichtung, wobei das Trainingssystem zum Durchführen eines Verfahrens nach dem vorhergehenden Aspekt ausgebildet ist. Insbesondere wird das Verfahren mittels des Trainingssystems durchgeführt.

Die elektronische Recheneinrichtung weist dabei insbesondere zumindest ein neuronales Netzwerk auf. Ferner weist die elektronische Recheneinrichtung zumindest Prozessoren, Schaltkreise, insbesondere integrierte Schaltkreise, sowie weitere elektronische Bauteile auf, um entsprechende Verfahrensschritte durchführen zu können.

Vorteilhafte Ausgestaltungsformen des Verfahrens sind als vorteilhafte Ausgestaltungsformen des Computerprogrammprodukts, des computerlesbaren Speichermediums sowie des Trainingssystems anzusehen. Das Trainingssystem weist insbesondere gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die Zeichnungen näher erläutert. Dabei zeigt die einzige Figur ein schematisches Blockschaltbild einer Ausführungsform eines Stromvorhersagesystems.

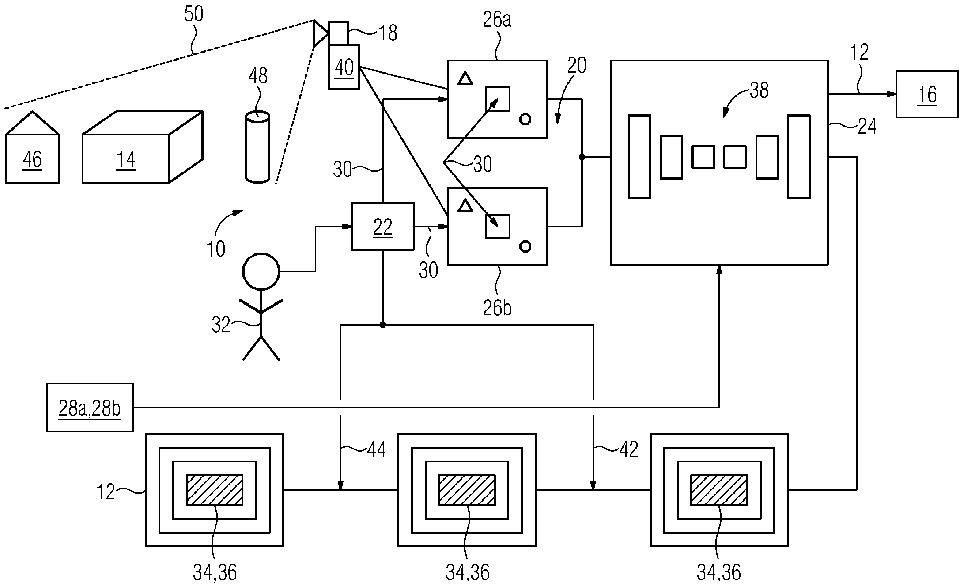

Dabei zeigt die einzige
- FIG 1: ein schematisches Blockschaltbild gemäß einer Ausführungsform eines Trainingssystems.

In der Figur sind gleiche oder funktionsgleiche Elemente mit den gleichen Bezugszeichen versehen.

FIG 1 zeigt ein schematisches Blockschaltbild gemäß einer Ausführungsform des Trainingssystems 10. Das Trainingssystem 10 ist zum Erzeugen von Trainingsdaten 12 für ein Objekt 14 zum Anlernen einer künstlichen Intelligenz 16 ausgebildet. Das Trainingssystem 10 weist zumindest eine Erfassungseinrichtung 18, eine Anzeigeeinrichtung 20, eine Eingabeeinrichtung 22 sowie eine elektronische Recheneinrichtung 24 auf.

Insbesondere zeigt die FIG 1 eine so genannte Pipeline eines hybriden Modus zum Erzeugen der Trainingsdaten 12, insbesondere die Pipeline, mittels welcher die entsprechenden Trainingsdaten 12 erzeugt werden können.

Insbesondere wird zumindest ein erstes Bild 26a, 26b mit dem Objekt 14 aus einer ersten Perspektive und ein Erfassen von zumindest einem zweiten Bild 28a, 28b mit dem Objekt 14 aus einer zur ersten Perspektive unterschiedlichen zweiten Perspektive mittels der Erfassungseinrichtung 18, welche vorliegend insbesondere als Kamera dargestellt ist, durchgeführt. Es erfolgt das Erfassen einer Eingabe 30 einer Bedienperson 32 bezüglich einer Position des Objekts 14 im angezeigten ersten Bild 26a, 26b mittels der Eingabeeinrichtung 22. Insbesondere wird eine Position der Eingabe 30, nachfolgend insbesondere als Punkt dargestellt, am Objekt 14 erfasst. Es erfolgt das Bestimmen des Objekts 14 im ersten Bild 26a, 26b in Abhängigkeit von der Eingabe 30 der Bedienperson 32 mittels der elektronischen Recheneinrichtung 24. Es wird eine erste Objektinformation 34 in Abhängigkeit von dem bestimmten Objekt 14 im ersten Bild 26a, 26b mittels der elektronischen Recheneinrichtung 24 bestimmt. Es erfolgt das Bestimmen des Objekts 14 im zweiten Bild 28a, 28b in Abhängigkeit von der bestimmten ersten Objektinformation 34. Es wird eine zweite Objektinformation 36 in Abhängigkeit von dem bestimmten Objekt 14 im zweiten Bild 28a, 28b mittels der elektronischen Recheneinrichtung 24 bestimmt und das Erzeugen von Trainingsdaten 12 für das Objekt 14 zumindest in Abhängigkeit von der ersten Objektinformation 34 und der zweiten Objektinformation 36 wird durchgeführt.

Insbesondere ist vorgesehen, dass die erste Objektinformation 34 und/oder die zweite Objektinformation 36 auf Basis von Ähnlichkeiten in einer umgebenden Region der Eingabe 30 erzeugt werden.

Ferner ist insbesondere gezeigt, dass mittels eines neuronalen Netzwerks 38, beispielsweise in Form eines Decoders und eines Encoders, der elektronischen Recheneinrichtung 24 die erste Objektinformation 34 und/oder die zweite Objektinformation 36 bestimmt werden.

Ferner ist insbesondere vorgesehen, dass als erstes Bild 26a, 26b und/oder als zweites Bild 28a, 28b ein RGB-Bild 26a, 28a mit dem Objekt 14 erfasst wird. Des Weiteren ist insbesondere vorgesehen, dass als erstes Bild 26a, 26b und/oder als zweites Bild 28a, 28b ein Tiefenbild 26b, 28b mit dem Objekt 14 erfasst wird. Dabei ist insbesondere vorgesehen, dass zum Bestimmen der ersten Objektinformation 34 und/oder einer zweiten Objektinformation 36 eine RGB-Information des RGB-Bilds 26a, 28a und eine Tiefen-Information des Tiefenbilds 26b, 28b des ersten Bilds 26a, 26b und/oder des zweiten Bilds 28a, 28b genutzt werden.

Ferner zeigt die FIG 1 insbesondere, dass mittels einer automatisierten Einheit 40, beispielsweise mittels eines Roboters, welcher die Erfassungseinrichtung 18 aufweist, zumindest das erste Bild 26a, 26b und das zweite Bild 28a, 28b erfasst werden. Des Weiteren kann vorgesehen sein, dass mittels der elektronischen Recheneinrichtung 24 Steuerbefehle für die automatisierte Einheit 40 erzeugt werden, so dass auf Basis der Steuerbefehle zumindest zwei Positionen durch die automatisierte Einheit 40 angefahren werden und wobei an einer jeweiligen Position ein jeweiliges Bild 26a, 26b, 28a, 28b mit dem Objekt 14 erfasst wird.

Es kann weiterhin vorgesehen sein, dass mittels des neuronalen Netzwerks 38 die Eingabe der Bedienperson 32 verifiziert wird. Ferner kann vorgesehen sein, dass bevor die Trainingsdaten 12 erzeugt werden, der Bedienperson 32 die erste Objektinformation 34 und die zweite Objektinformation 36 auf der Anzeigeeinrichtung 20 zum Bestätigen angezeigt werden, was vorliegend durch eine weitere Eingabe 42 gezeigt ist. Ferner kann vorgesehen sein, dass vor dem Erzeugen der Trainingsdaten 12 eine nochmals weitere Eingabe 44 der Bedienperson 32 bezüglich einer weiteren Position des Objekts 14 im ersten Bild 26a, 26b und/oder dem zweiten Bild 28a, 28b erfasst wird.

Insbesondere zeigt somit die FIG 1 ein hybrides Verfahren, das Daten aus der realen Welt nutzt und qualitativ hochwertige, fehlerfreie Beschriftungen nutzt, und die Notwendigkeit von CAD-Dateien für das Objekt 14 beseitigt. Zunächst werden die zu erfassende Objekte 14, 46, 48 beziehungsweise das Objekt 14, über eine an einem Roboter montierte Kamera aufgenommen, die ein zweidimensionales RGB-Bild 26a, 28a und ein Tiefenbild 26b, 28b der realen Umgebung einschließlich der interessierenden Objekte 14, 46, 48 beziehungsweise dem Objekt 14 aufnimmt. Der Roboter bewegt sich mit der Kamera um das Objekt 14 herum, und es werden eine Vielzahl von Bildern 26a, 26b, 28a, 28b aufgenommen, so dass ein vollständiger Datensatz erstellt wird.

Anschließend fordert das Trainingssystem 10 die Bedienperson 32 auf, auf das zu erfassende Objekt 14 zu zeigen und dem Objekt 14 beispielsweise einen Namen zu geben. Dieser Punkt wird in der dreidimensionalen Welt festgelegt und durch eine Projektion auf den Bildraum ausgebildet. Insbesondere ist dies durch die Eingabe 30 dargestellt. Diese Eingabe 30 entspricht dabei lediglich einer ersten Vermutung, und wird von dem neuronalen Netzwerk 38 übernommen, das unter Verwendung der RGB-Bilder 26a, 28a und der Tiefenbilder 26b, 28b die Position der ersten Vermutung so fein abstimmt, dass diese auf dem Objekt 14 des Bildes liegt, in dem sich das Objekt 14 befindet. Dieser Schritt ist dabei vorgesehen, da die Eingabe 30 bei der ersten Vermutung ungenau sein könnte. Anschließend wird der korrigierte Punkt von einem anderen Algorithmus übernommen, der durch die Suche nach Ähnlichkeiten in Regionen nahe der korrigierten ursprünglichen Vermutung eine Region beziehungsweise Maske vorschlägt, in der sich das Objekt 14 befindet. Insbesondere entspricht dies der ersten Objektinformation 34 beziehungsweise der zweiten Objektinformation 36. Dies geschieht für ein Bild eines jeden Winkels des Objekts 14, so dass die vorgeschlagenen maskierten Regionen der Bedienperson 32 wieder angezeigt werden können. Dabei erhält die Bedienperson 32 eine Rückmeldung über die Qualität der Segmentierung, um anschließend die Region durch Eingabe zusätzlicher Positionen in der dreidimensionalen Welt zu ändern. Schließlich wird dieses Feedback an den Segmentierungsalgorithmus zurückgegeben, und der Arbeitsablauf wird so lange wiederholt, bis die Bedienperson 32 zufrieden ist und die Trainingsdaten 12 an die künstliche Intelligenz 16 weitergegeben werden können.

### Bezugszeichenliste

- 10: Trainingssystem
- 12: Trainingsdaten
- 14: Objekt
- 16: künstliche Intelligenz
- 18: Erfassungseinrichtung
- 20: Anzeigeeinrichtung
- 22: Eingabeeinrichtung
- 24: elektronische Recheneinrichtung
- 26a: RGB-Bild
- 26b: Tiefenbild
- 28a: RGB-Bild
- 28b: Tiefenbild
- 30: Eingabe
- 32: Bedienperson
- 34: erste Objektinformation
- 36: zweite Objektinformation
- 38: neuronales Netzwerk
- 40: automatisierte Einheit
- 42: weitere Eingabe
- 44: nochmals weitere Eingabe
- 46: weiteres Objekt
- 48: nochmals weiteres Objekt

## Patentansprüche

1. Verfahren zum Erzeugen von Trainingsdaten (12) für ein Objekt (14) zum Anlernen einer künstlichen Intelligenz (16) mittels eines Trainingssystems (10), mit den Schritten:
- Erfassen von zumindest einem ersten Bild (26a, 26b) mit dem Objekt (14) aus einer ersten Perspektive (50) und Erfassen von zumindest einem zweiten Bild (28a, 28b) mit dem Objekt (14) aus einer zur ersten Perspektive (50) unterschiedlichen zweiten Perspektive mittels einer Erfassungseinrichtung (1) des Trainingssystems (10);
- Anzeigen des ersten Bilds (26a, 26b) auf einer Anzeigeeinrichtung (20) des Trainingssystems (10);
- Erfassen einer Eingabe (30) einer Bedienperson (32) des Trainingssystems (10) bezüglich einer Position des Objekts (14) im angezeigten ersten Bild (26a, 26b) mittels einer Eingabeeinrichtung (22) des Trainingssystems (10);
- Bestimmen des Objekts (14) im ersten Bild (26a, 26b) in Abhängigkeit von der Eingabe (30) der Bedienperson (32) mittels einer elektronischen Recheneinrichtung (24) des Trainingssystems (10);
- Erzeugen einer ersten Objektinformation (34) in Abhängigkeit von dem bestimmten Objekt (14) im ersten Bild (26a, 26b) mittels der elektronischen Recheneinrichtung (24);
- Bestimmen des Objekts (14) im zweiten Bild (28a, 28b) in Abhängigkeit von der bestimmten ersten Objektinformation (34) mittels der elektronischen Recheneinrichtung (24);
- Erzeugen von einer zweiten Objektinformation (36) in Abhängigkeit von dem bestimmten Objekt (14) im zweiten Bild (28a, 28b) mittels der elektronischen Recheneinrichtung (24); und
- Erzeugen von Trainingsdaten (12) für das Objekt (14) zumindest in Abhängigkeit von der ersten Objektinformation (34) und der zweiten Objektinformation (36) mittels der elektronischen Recheneinrichtung (24).

2. Verfahren nach Anspruch 1, **dadurch gekennzeichnet, dass** die erste Objektinformation (34) und/oder die zweite Objektinformation (36) auf Basis von Ähnlichkeiten in einer umgebenden Region der Eingabe (30) erzeugt werden.

3. Verfahren nach Anspruch 1 oder 2, **dadurch gekennzeichnet, dass** mittels eines neuronalen Netzwerks (38) der elektronischen Recheneinrichtung (24) die erste Objektinformation (34) und/oder die zweite Objektinformation (36) bestimmt werden.

4. Verfahren nach einem der vorhergehenden Ansprüche, **dadurch gekennzeichnet, dass** mittels einer Kamera als Erfassungseinrichtung (18) zumindest das erste Bild (26a, 26b) und/oder das zweite Bild (28a, 28b) erfasst werden.

5. Verfahren nach einem der vorhergehenden Ansprüche, **dadurch gekennzeichnet, dass** als erstes Bild (26a, 26b) und/oder als zweites Bild (28a, 28b) ein RGB-Bild (26a, 28a) mit dem Objekt (14) erfasst werden.

6. Verfahren nach einem der vorhergehenden Ansprüche, **dadurch gekennzeichnet, dass** als erstes Bild (26a, 26b) und/oder als zweites Bild (28a, 28b) ein Tiefenbild (26b, 28b) mit dem Objekt (14) erfasst werden.

7. Verfahren nach Anspruch 5 und 6, **dadurch gekennzeichnet, dass** zum Bestimmen der ersten Objektinformation (34) und/oder der zweiten Objektinformation (36) eine RGB-Information des RGB-Bilds (26a, 28a) und eine Tiefeninformation des Tiefenbilds (26b, 28b) des ersten Bilds (26a, 26b) und/oder des zweiten Bilds (28a, 28b) genutzt werden.

8. Verfahren nach einem der vorhergehenden Ansprüche, **dadurch gekennzeichnet, dass** mittels einer automatisierten Einheit (40), welche die Erfassungseinrichtung (18) aufweist, zumindest das erste Bild (26a, 26b) und das zweite Bild (28a, 28b) erfasst werden.

9. Verfahren nach Anspruch 8, **dadurch gekennzeichnet, dass** mittels der elektronischen Recheneinrichtung (24) Steuerbefehle für die automatisierte Einheit (40) erzeugt werden, so dass auf Basis der Steuerbefehle zumindest zwei Positionen durch die automatisierte Einheit (40) angefahren werden und wobei an einer jeweiligen Position ein jeweiliges Bild (26a, 26b, 28a, 28b) mit dem Objekt (14) erfasst wird.

10. Verfahren nach einem der vorhergehenden Ansprüche, **dadurch gekennzeichnet, dass** mittels eines neuronalen Netzwerks (38) die Eingabe (30) der Bedienperson (32) verifiziert wird.

11. Verfahren nach einem der vorhergehenden Ansprüche, **dadurch gekennzeichnet, dass** bevor die Trainingsdaten (12) erzeugt werden, der Bedienperson (32) die erste Objektinformation (34) und/oder die zweite Objektinformation (36) auf der Anzeigeeinrichtung (20) zum Bestätigen angezeigt werden.

12. Verfahren nach einem der vorhergehenden Ansprüche, **dadurch gekennzeichnet, dass** vor dem Erzeugen der Trainingsdaten (12) eine nochmals weitere Eingabe (44) der Bedienperson (32) bezüglich einer weiteren Position des Objekts (14) im ersten Bild (26a, 26b) und/oder im zweiten Bild (28a, 28b) erfasst wird.

13. Computerprogrammprodukt mit Programmcodemitteln, welche eine elektronische Recheneinrichtung (24) dazu veranlassen, wenn die Programmcodemittel von der elektronischen Recheneinrichtung (24) abgearbeitet werden, ein Verfahren nach einem der Ansprüche 1 bis 12 durchzuführen.

14. Computerlesbares Speichermedium mit zumindest dem Computerprogrammprodukt nach Anspruch 13.

15. Trainingssystem (10) zum Erzeugen von Trainingsdaten (12) für ein Objekt (14) zum Anlernen einer künstlichen Intelligenz (16), mit zumindest einer Erfassungseinrichtung (18), einer Anzeigeeinrichtung (20), einer Eingabeeinrichtung (22) und einer elektronischen Recheneinrichtung (24), wobei das Trainingssystem (10) zum Durchführen eines Verfahrens nach einem der Ansprüche 1 bis 12 ausgebildet ist.
